# EUROPEAN PATENT APPLICATION

(11) **EP 4 563 057 A1**
(43) Date of publication of application: **04.06.2025**
(21) Application number: 23878709.7
(22) Date of filing: 30.06.2023
(51) Int. Cl.: A47L 11/282, A47L 11/40

(54) **FLOOR BRUSH ASSEMBLY AND FLOOR CLEANING APPARATUS**

(30) Priority: 19.10.2022 CN 202222764853 U
(71) Applicant: Guangdong Xinbao Electrical Appliances Holdings Co., Ltd., Foshan, Guangdong 528322 (CN)
(72) Inventor: GUO, Jiangang, Foshan, Guangdong 528322 (CN); SONG, Weiming, Foshan, Guangdong 528322 (CN); ZHANG, Aiping, Foshan, Guangdong 528322 (CN)
(74) Representative: Monteiro Alves, Inês
(86) International application number: PCT/CN2023/104515
(87) International publication number: WO 2024/082712

(57) **Abstract**

A floor brush assembly (1) and a floor cleaning apparatus, belonging to the technical field of floor cleaning. The floor brush assembly (1) comprises: a floor brush main body (10), a roller brush cavity (102) being provided on the floor brush main body (10), and a roller brush insertion opening (103) and a roller brush driving shaft being sequentially provided on the two side wall surfaces of the floor brush main body (10); a roller brush assembly (12), comprising a roller brush (120) provided in the roller brush cavity (102) and a roller brush holder (121) connected to a first end of the roller brush (120), a second end of the roller brush (120) being sleeved on the roller brush driving shaft, and a handle recess (1213) being provided on the roller brush holder (121); a roller brush handle (13), which is movably connected to the roller brush holder (121) and has a first state of being hidden in the handle recess (1213) and a second state of being exposed outside the handle recess (1213); and a roller brush release member (11), which is provided on the floor brush main body (10) and used for being snapped onto or separated from the roller brush handle (13), so as to switch the roller brush handle (13) between the first state and the second state. The present invention facilitates detachment and mounting of the roller brush (120).

## Description

### TECHNICAL FIELD

This invention generally relates to the technical field of floor cleaning, and more particularly, to a floor brush assembly and a floor cleaning apparatus.

### BACKGROUND

For conventional floor mopping products sold on the market, when a roller brush needs to be replaced or a roller brush assembly needs to be disassembled, a roller brush handle needs to be hold with hands. For example, Chinese patent CN216652191U discloses a convenient-to-disassemble roller brush, wherein the roller brush is mounted on a floor brush main body, one end of the roller brush is connected to a release member, and the roller brush is connected to the floor brush main body through the release member. When applying a downward force to a connecting member on the release member, a locking member is propelled to move downwards. At this point, the locking member is no longer in a locking state, allowing the roller brush to be disassembled. However, when disassembling the roller brush, a locking portion of the release member needs to be pulled out from a locking recess in the floor brush main body, and then the floor brush is taken out. The entire process requires a user to hold the roller brush or release member. Due to the thin release member, it is difficult for the user to hold and apply force, resulting in inconvenient disassembly of the roller brush.

### SUMMARY

The purpose of the present invention is to provide a floor brush assembly that facilitates the detachment and mounting of a roller brush, and a floor cleaning apparatus having the floor brush assembly.

To achieve the above purpose, the present invention adopts the following technical solution: a floor brush assembly, comprising a floor brush main body, a roller brush assembly, a roller brush handle and a roller brush release member; the floor brush main body is provided with a roller brush cavity; a first side wall surface of the floor brush main body is provided with a roller brush insertion opening in communication with the roller brush cavity, and a second side wall surface of the floor brush main body is provided with a roller brush driving shaft; the roller brush assembly comprises a roller brush arranged in the roller brush cavity and a roller brush holder connected to a first end of the roller brush; a second end of the roller brush is inserted into the roller brush driving shaft, the roller brush holder is detachably connected to the floor brush main body, and the roller brush holder is provided with a handle recess; the roller brush handle, which is movably connected to the roller brush holder, has a first state of being hidden in the handle recess and a second state of being exposed outside the handle recess; the roller brush release member is arranged on the floor brush main body for being snapped onto or separated from the roller brush handle, thereby switching the roller brush handle between the first state and the second state.

In another preferred embodiment, the roller brush release member comprises a fixing holder, a release member, a control member and a reset spring. The fixing holder is arranged in the floor brush main body. The release member is arranged on the fixing holder and is capable of sliding in the vertical direction of the fixing holder, thereby being snapped onto or separated from the roller brush handle. The control member is connected to the release member. The release member is propelled to slide along the fixing holder when an external force is imposed on the control member. The top of the reset spring abuts against a main body portion of the bottom of the release member, and the bottom of the reset spring abuts against a bottom shell in the floor brush main body, thereby imposing an upward first acting force on the control member. Thus, by imposing the external force on the control member, the release member is conveniently snapped onto or separated from the roller brush handle.

In another preferred embodiment, the release member comprises a main body portion and a snapping arm connected to the main body portion and extending transversely. A free end of the snapping arm is provided with a hook portion. The roller brush holder is provided with a first notch that is in communication with the handle recess and extends vertically. The snapping arm passes through the first notch and extends into the handle recess. When the release member slides on the fixing holder, the snapping arm is propelled to slide along the first notch, thereby enabling the hook portion to be snapped onto or separated from the roller brush handle.

In another preferred embodiment, the fixing holder is provided with a sliding cavity penetrating through an upper surface and a lower surface of the fixing holder. A wall of the sliding cavity is provided with a second notch corresponding to the first notch. The main body portion of the release member is arranged in the sliding cavity, and the snapping arm of the release member passes through the second notch, thereby ensuring that the release member moves vertically.

In another preferred embodiment, the roller brush handle is rotatably connected to the roller brush holder by means of a rotating shaft, and the axis of the rotating shaft is perpendicular to the axis of the roller brush. The roller brush handle is capable of rotating relative to the roller brush holder, so that the roller brush handle is screwed in or screwed out from the handle recess.

In another preferred embodiment, the roller brush handle comprises a handle portion and a connecting portion connected to one end of the handle portion. The connecting portion is rotatably connected to the rotating shaft. When the roller brush handle is in the second state, the extending direction of the handle portion is consistent with the axial direction of the roller brush, which allows the user to hold the handle portion to directly pull out the roller brush from the roller brush insertion opening along the axial direction of the roller brush. Thus, the resistance in other directions is avoided when the roller brush is pulled out.

In another preferred embodiment, the handle portion of the roller brush handle is provided with an inner cavity, and an outer wall surface of the handle portion is provided with an inserting port in communication with the inner cavity. When the roller brush handle is in the first state, the free end of the snapping arm extends into the inner cavity through the inserting port and is snapped onto a wall of the inner cavity by means of the hook portion. The structure is simple. When the hook portion at an end of the snapping arm is snapped onto or separated from the wall of the inner cavity, the roller brush handle is fixed or released.

In another preferred embodiment, the rotating shaft is arranged in the handle recess. A torsion spring is sleeved on the rotating shaft, and the torsion spring is configured to impose a second acting force for screwing the roller brush handle out from the handle recess. When the release member is separated from the roller brush handle, the roller brush handle is automatically screwed out from the handle recess under the second acting force such that the manual operation is avoided.

In another preferred embodiment, the roller brush holder comprises a vertically arranged plate body. A first end portion of the plate body is detachably connected to the roller brush, and a second end portion of the plate body opposite to the first end portion is recessed toward the floor brush main body to form the handle recess. A convex portion is formed on a side facing the floor brush main body, and a groove is formed in a first side surface of the floor brush main body for accommodating the convex portion. When the convex portion on the roller brush holder is inserted into the groove in the floor brush main body, the roller brush is supported, and the cleaning effect of the floor brush main body along the wall is prevented from being affected due to the excessive space occupation of the roller brush holder on one side of the floor brush main body.

A floor cleaning apparatus, comprising a body assembly, a handle assembly, and the floor brush assembly in any one of above embodiments. The body assembly is respectively connected to floor brush assembly and the handle assembly.

Compared with the prior art, the present invention has the following advantages: by arranging the roller brush handle and the handle recess on the roller brush holder, when the roller brush needs to be replaced, the roller brush release member is separated from the roller brush handle; at this point, the roller brush handle is exposed outside the handle recess, allowing a user to quickly take out the roller brush by holding the roller brush handle; when the roller brush does not need to be replaced, the roller brush handle is hidden in the handle recess, which facilitates the detachment of the roller brush and does not affect the normal cleaning of the floor brush assembly.

### BRIEF DESCRIPTION OF THE DRAWINGS

Figure 1 is a schematic diagram illustrating an explosive view of the floor brush assembly of the present invention;
Figure 2 is a schematic diagram illustrating an explosive view of the roller brush holder, wherein the roller brush handle is shown;
Figure 3 is a schematic diagram illustrating an exemplary structure of the fixing holder;
Figure 4 is a schematic diagram illustrating an exemplary structure of the release member;
Figure 5 is a schematic diagram illustrating an exemplary structure of the roller brush release member;
Figure 6 is a schematic diagram illustrating a partial sectional view of the floor brush assembly, wherein the roller brush handle is in the first state;
Figure 7 is a schematic diagram illustrating a partial sectional view of the floor brush assembly, wherein the roller brush handle is in the second state;
Figure 8 is a schematic diagram illustrating a sectional view of the floor brush assembly;
Figure 9 is a schematic diagram illustrating an enlarged structure of portion I in Figure 8; and
Figure 10 is a schematic diagram illustrating an exemplary structure of the floor cleaning apparatus of the present invention;

In Figures: 10-Floor Brush Main Body, 100-Floor Mopping Upper Cover, 101-Floor Mopping Bottom Shell, 102-Roller Brush Cavity, 103-Roller Brush Insertion Opening, 104-Pressing Port, 105-Groove, 11-Roller Brush Release Member, 110-Control Member, 111-Fixing Holder, 1110-Sliding Cavity, 1111-The Second Notch, 112-Release Member, 1120-Main Body Portion, 1121-Snapping Arm, 1122-Hook Portion, 113-Reset Spring, 12-Roller Brush Assembly, 120-Roller Brush, 121-Roller Brush Holder, 1210-Plate Body, 1211-Rotating Shaft, 1212-Torsion Spring, 1213-Handle Recess, 1214-Convex Portion, 1215-The First Notch, 13-Roller Brush Handle, 130-Handle Portion, 131-Connection Portion, 132-Inner Cavity, 133-Inserting Port, 2-Body Assembly, 3-Handle Assembly.

### DETAILED DESCRIPTION

The technical terms or scientific terms used in the present invention shall have ordinary meanings understood by persons with ordinary skills in the field to which the present invention belongs. The "first", "second" and similar terms used in the present invention do not indicate any order, quantity or importance, but are only used to distinguish different components. Terms such as "comprising" or "including" mean that the component or object present before the terms covers the component or object listed after the term and its equivalent, and does not exclude other components or objects. The term "connection" or "connected" is not limited to physical or mechanical connections, but includes electrical connections, whether direct or indirect. "Upper", "lower", "left", and "right" are used only to indicate the relative positional relationships. When the absolute position of the described object varies, the relative positional relationship also varies accordingly.

To keep the following description of the embodiments of the present invention clear and concise, detailed description of known functions and known components are omitted.

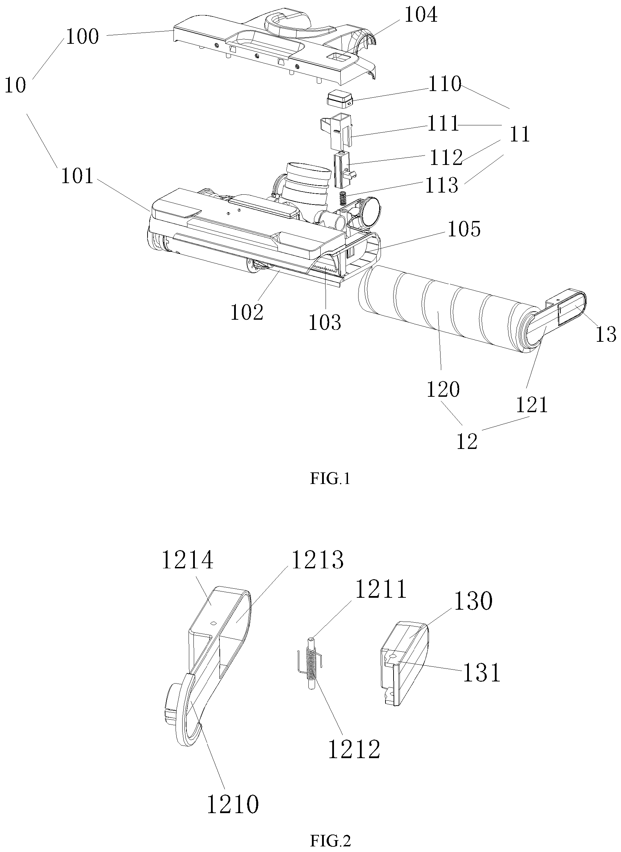

Referring to Figure 1, the present invention provides a floor brush assembly, comprising a floor brush main body 10, a roller brush assembly 12, a roller brush handle 13 and a roller brush release member 11.

The floor brush main body 10 is provided with a roller brush cavity 102. A first side wall surface of the floor brush main body 10 is provided with a roller brush insertion opening 103 in communication with the roller brush cavity 102, and an inner side of a second side wall surface of the floor brush main body 10 is provided with a roller brush driving shaft (not shown). The roller brush driving shaft is connected to a driving mechanism for propelling the roller brush 120 to rotate, and the driving mechanism propels the roller brush driving shaft to rotate, thereby propelling the roller brush 120 to rotate.

Referring to Figure 2, the roller brush assembly 12 comprises a roller brush 120 and a roller brush holder 121 connected to a first end of the roller brush 120. The roller brush 120 is mounted in the roller brush cavity 102, and a second end of the roller brush 120 is inserted into the roller brush driving shaft. The roller brush holder 121 is detachably mounted on the floor brush main body 10 for supporting the second end of the roller brush 120, and the roller brush holder 121 is provided with a handle recess 1213.

The roller brush handle 13, which is movably connected to the roller brush holder 121, has a first state of being hidden in the handle recess 1213 and a second state of being exposed outside the handle recess 1213.

The roller brush release member 11 is arranged on the floor brush main body 10 for being snapped onto or separated from the roller brush handle 13, thereby switching the roller brush handle 13 between the first state and the second state.

According to the floor brush assembly 1 in this embodiment, the roller brush handle 13 and the handle recess 1213 are arranged on the roller brush holder 121. When the roller brush 120 needs to be replaced, the roller brush handle 13 is switched to the second state by separating the roller brush release member 11 from the roller brush handle 13. At this point, the roller brush handle is exposed outside the handle recess 1213, allowing a user to quickly take out the roller brush by holding the roller brush handle 13. When the roller brush does not need to be replaced, the roller brush handle 13 is hidden in the handle recess 1213, which facilitates the detachment of the roller brush and does not affect the normal cleaning of the floor brush assembly.

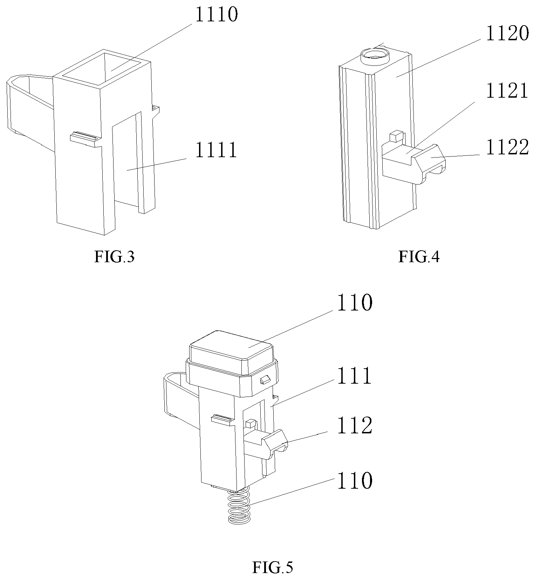

Referring to Figures 1 and 5, in some embodiments, the roller brush release member 11 comprises a fixing holder 111, a release member 112, a control member 110 and a reset spring 113.

The fixing holder 111 is arranged in the floor brush main body 10. The release member 112 is arranged on the fixing holder 111 and is capable of sliding in the vertical direction of the fixing holder 111, thereby being snapped onto or separated from the roller brush handle 13.

The control member 110 is arranged above the release member 112 and is fixedly connected to the release member 112. The release member 112 is propelled to slide downward on the fixing holder 111 when a downward acting force is imposed on the control member 110.

The top of the reset spring 113 abuts against the top of the control member 110, and the bottom of the reset spring 113 abuts against a bottom shell in the floor brush main body 10, thereby imposing an upward first acting force on the control member 110.

In this embodiment, the release member 112 may be snapped onto the roller brush handle 13 when located at the top of the fixing holder 111 and may be separated from the roller brush handle 13 when located at the bottom of the fixing holder 111.

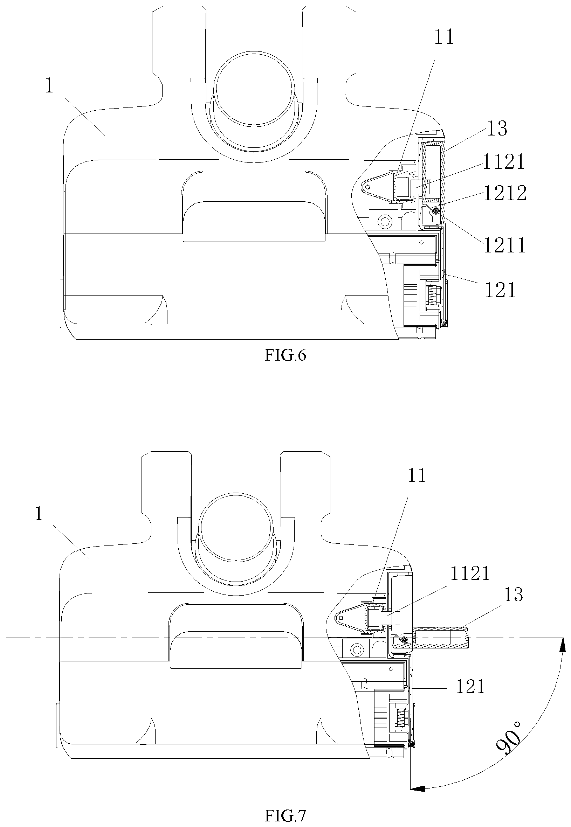

Referring to Figure 7, when the roller brush 120 reaches its limit of functional life, or the roller brush 120 needs to be taken out for cleaning due to mistaken operation, by imposing a downward acting force on the control member 110, the control member 110 propels the release member 112 to move downward to squeeze the reset spring 113. When the release member 112 reaches the bottom of the fixing holder 111, the release member 112 is separated from the roller brush handle 13. At this point, the roller brush handle 13 is switched from the first state to the second state and is exposed outside the handle recess 1213, thus allowing the user to hold the roller brush handle 13 to take the roller brush 120 out from the roller brush insertion opening 103. Referring to Figure 6, when the replacement of the roller brush 120 is completed, the pressing force imposed on the control member 110 disappears, and the release member 112 moves upwards under the acting force of the reset spring 113 and returns to the top of the fixing holder 111 again. Subsequently, the roller brush handle 13 is switched to the first state, and the release member 112 is snapped onto the roller brush handle 13. In this way, the roller brush handle 13 is limited in the handle recess 1213 such that convenient storage and hiding are achieved.

Referring to Figure 4, in some embodiments, the release member 112 comprises a main body portion 1120 and a snapping arm 1121 connected to the main body portion 1120. The snapping arm 1121 is transversely arranged, and a free end of the snapping arm 1121 is provided with a hook portion 1122 protruding upward. The main body portion 1120 is slidably arranged on the fixing holder 111.

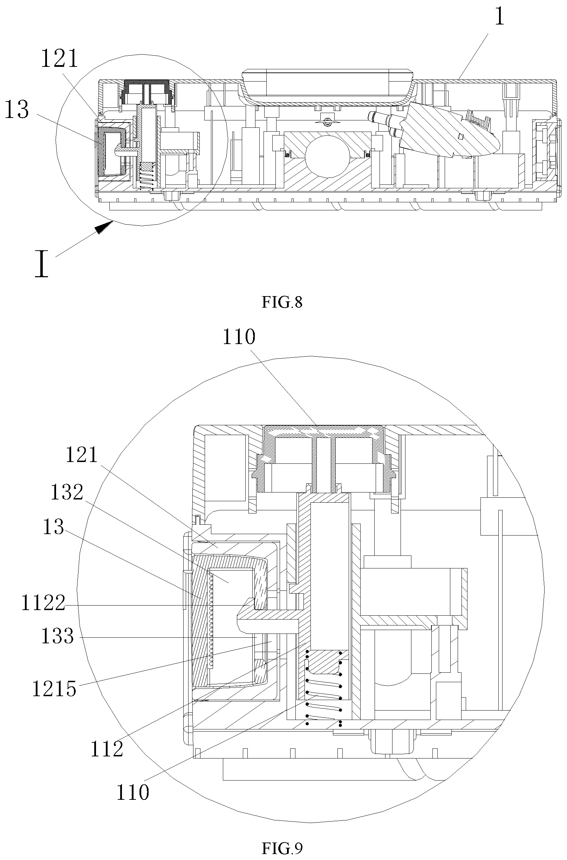

Further, referring to Figures 8 and 9, a side surface of the roller brush holder 121 facing the floor brush main body 10 is provided with a first notch 1215 in communication with the handle recess 1213. The first notch 1215 extends vertically in the roller brush holder 121, and the snapping arm 1121 on the release member 112 passes through the first notch 1215 and extends into the handle recess 1213 in the roller brush holder 121, so that the hook portion 1122 on the snapping arm 1121 is snapped onto or separated from the roller brush handle 13.

In some embodiments, the hook portion 1122 on the snapping arm 1121 is snapped onto a snapping mechanism arranged on the roller brush handle 13. When the release member 112 moves to the top of the fixing holder 111, the hook portion 1122 on the snapping arm 1121 is snapped onto the snapping mechanism, and when the release member 112 moves to the bottom of the fixing holder 111, the hook portion 1122 on the snapping arm 1121 is separated from the snapping mechanism.

Referring to Figure 3, in some embodiments, the fixing holder 111 is provided with a sliding cavity 1110 penetrating through an upper surface and a lower surface of the fixing holder 111. A wall of the sliding cavity 1110 is provided with a second notch 1111 corresponding to the first notch 1215 in the roller brush holder 121, and the second notch 1111 also extends vertically. The main body portion 1120 of the release member 112 is arranged in the sliding cavity 1110, and the top of the main body portion 1120 extends out from the top of the sliding cavity 1110 and is connected to the control member 110. The snapping arm 1121 connected to the main body portion 1120 passes through the second notch 1111. Thus, when the user presses the control member 110, the main body portion vertically moves in the sliding cavity 1110, thereby propelling the snapping arm 1121 to simultaneously vertically move in the first notch 1215 and the second notch 1111. In this way, the snapping arm 1121 is snapped onto the roller brush handle 13 when located at a high position and is separated from the roller brush handle 13 when located at a low position, so that the locking and releasing of the roller brush handle 13 are achieved.

Referring to Figure 1, in some embodiments, the floor brush main body 10 comprises a floor mopping upper cover 100 and a floor mopping bottom shell 101. The floor mopping upper cover 100 is buckled onto the floor mopping bottom shell 101, and the floor mopping upper cover 100 is provided with a pressing port 104. The fixing holder 111 of the roller brush release member 11 is fixed on the floor mopping bottom shell 101, and the control member 110 is located in the pressing port 104 and protrudes out from the pressing port 104. Thus, when the roller brush 120 needs to be replaced, the user may control the roller brush release member 11 to lock and release the roller brush handle 13 by pressing the control member 110, achieving a simple structure and convenient operation.

Referring to Figure 2, in some embodiments, the roller brush handle 13 is rotatably connected to the roller brush holder 121 by means of a rotating shaft 1211. The rotating shaft 1211 is arranged in the handle recess 1213, and the axis of the rotating shaft 1211 is perpendicular to the axis of the roller brush 120. When the user presses the control member 110, the release member 112 is separated from the roller brush handle 13, allowing the roller brush handle 13 to be screwed out from the handle recess 1213. At this point, the user conveniently holds the roller brush handle 13 to take out the roller brush holder 121 and the roller brush 120 from the floor brush main body 10. Similarly, when a new roller brush 120 is mounted, the control member 110 is pressed again, and the roller brush handle 13 is screwed into the handle recess 1213. At this point, the control member 110 is released, so that the fixing of the roller brush handle 13 is realized.

It is worth mentioning that, the shape of the handle recess 1213 corresponds to the shape of the roller brush handle 13. Alternatively, when the roller brush handle 13 is screwed into the handle recess 1213, an outer side of the roller brush handle 13 is flush with an outer side of the roller brush holder 121 and does not protrude out from the outer side of the roller brush holder 121. In this way, when the floor brush assembly 1 sweeps along the wall, the poor cleaning effect caused by the protruding portion of the roller brush handle 13 preventing a side of the floor brush assembly 1 from being tightly attached to the wall is effectively avoided.

Further, in some embodiments, a torsion spring 1212 is sleeved on the rotating shaft 1211, and the torsion spring 1212 is configured to impose a second acting force for screwing the roller brush handle 13 out from the handle recess 1213. When the release member 112 is separated from the roller brush handle 13, the roller brush handle 13 is automatically screwed out from the handle recess 1213 under the second acting force such that the manual operation is avoided.

Referring again to Figure 2, in some embodiments, the roller brush handle 13 comprises a handle portion 130 and a connecting portion 131 connected to one end of the handle portion 130. The connecting portion 131 is provided with a through hole, and the rotating shaft 1211 passes through the through hole, thereby enabling the handle portion 130 to rotate by taking an axis of the rotating shaft 1211 as a rotation center.

Referring to Figure 7, preferably, when the handle portion 130 rotates in the handle recess 1213, the extending direction of the handle portion 130 is consistent with the axial direction of the roller brush 120, which allows the user to hold the handle portion 130 to directly pull out the roller brush 120 from the roller brush insertion opening 103. Thus, the resistance in other directions is avoided when the roller brush 120 is pulled out.

Referring to Figure 9, in some embodiments, the handle portion 130 of the roller brush handle 13 is provided with an inner cavity 132, and an outer wall surface of the handle portion 130 is provided with an inserting port 133. When the roller brush handle 13 is screwed into the handle recess 1213, the inserting port 133 in the handle portion 130 is opposite to the first notch 1215 in the roller brush holder 121, and the free end of the snapping arm 1121 extends into the inner cavity 132 of the handle portion 130 through the inserting port 133. When the control member 110 is not pressed, the hook portion 1122 of the snapping arm 1121 abuts against the wall of the inner cavity 132 of the handle portion 130 such that the snapping effect is achieved. In this way, the roller brush handle 13 is fixed in the handle recess 1213. When the control member 110 is pressed downwards, the hook portion 1122 on the snapping arm 1121 moves downwards and is separated from the wall of the inner cavity 132 of the handle portion 130. Thus, the handle portion 130 is released, and the roller brush handle 13 is automatically screwed out from the handle recess 1213 under the action of the torsion spring 1212.

In this embodiment, the shape or length of the handle portion 130 may be configured to allow the handle to be comfortably hold by the user, which is not specifically limited.

Referring to Figure 2, in some embodiments, the roller brush holder 121 comprises a vertically arranged plate body 1210, a first end portion of the plate body 1210 is provided with a hollow column body, and the hollow column body is detachably connected to a first end of the roller brush 120. In this way, after the roller brush holder 121 and the roller brush 1120 are detached from the floor brush main body 10, the used roller brush 120 is detached from the roller brush holder. Subsequently, a new roller brush 120 is mounted on the roller brush holder and then mounted on the floor brush main body 10.

Further, a second end portion of the plate body 1210 opposite to the first end portion is recessed toward the floor brush main body 10 to form the handle recess 1213 with an outward opening. A convex portion 1214 is formed on a side facing the floor brush main body 10, and a groove 105 is formed in a first side surface of the floor brush main body 10. When the roller brush 120 is arranged in the roller brush cavity 102, the convex portion 1214 on the roller brush holder 121 is capable of being inserted into the groove 105 of the floor brush main body 10, thereby supporting the second end of the roller brush 120 while reducing the size of the roller brush holder 121 along the axial direction of the roller brush 120 on one side of the floor brush main body 1 as much as possible. Thus, the side wall of the floor brush main body 1 is tightly attached to the wall when sweeping along the wall.

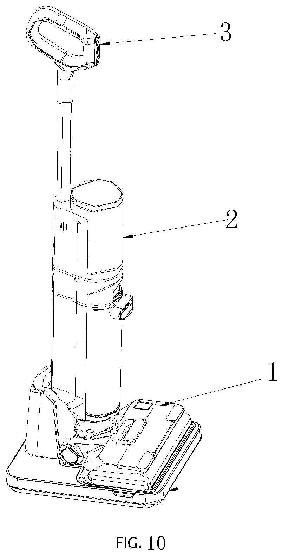

Referring to Figure 10, the present invention also provides a floor cleaning apparatus, comprising a body assembly 2, a handle assembly 3, and the floor brush assembly 1 in any one of above embodiments. The floor brush assembly 1 is fixed at the bottom of the body assembly 2, and the handle assembly 3 is fixed at the top of the body assembly 2.

The above description is intended to be illustrative rather than restrictive, and those skilled in the art may make changes, modifications, replacements and variations to the above embodiments within the scope of the present invention. Moreover, the above embodiments (or one or more of solutions) may be combined with each other, and it is considered that these embodiments may be combined with each other in various combinations or arrangements.

## Claims

1. A floor brush assembly, comprising:
a floor brush main body (10),
a roller brush assembly (12),
a roller brush handle (13), and
a roller brush release member (11), wherein the floor brush main body (10) is provided with a roller brush cavity (102), wherein a first side wall surface of the floor brush main body (10) is provided with a roller brush insertion opening (103) in communication with the roller brush cavity (102), wherein a second side wall surface of the floor brush main body (10) is provided with a roller brush driving shaft, wherein the roller brush assembly (12) comprises:
a roller brush (120) arranged in the roller brush cavity (102) and a roller brush holder (121) connected to a first end of the roller brush (120), wherein a second end of the roller brush (120) is inserted into the roller brush driving shaft, wherein the roller brush holder (121) is detachably connected to the floor brush main body (10), wherein the roller brush holder (121) is provided with a handle recess (1213), wherein the roller brush handle (13), which is movably connected to the roller brush holder (121), has a first state of being hidden in the handle recess (1213) and a second state of being exposed outside the handle recess (1213), and wherein the roller brush release member (11) is arranged on the floor brush main body (10) for being snapped onto or separated from the roller brush handle (13), thereby switching the roller brush handle (13) between the first state and the second state.

2. The floor brush assembly of claim 2, wherein the roller brush release member (11) comprises:
a fixing holder 111, a release member (112), a control member (110) and a reset spring (113), wherein the fixing holder (111) is arranged in the floor brush main body (10), wherein the release member (112) is arranged on the fixing holder (111) and is capable of sliding in the vertical direction of the fixing holder (111), thereby being snapped onto or separated from the roller brush handle (13), wherein the control member (110) is connected to the release member (112), wherein the release member (112) is propelled to slide along the fixing holder (111) when an external force is imposed on the control member (110), wherein the top of the reset spring (113) abuts against the bottom of the release member (112), and wherein the bottom of the reset spring (113) abuts against an bottom shell in the floor brush main body (10), thereby imposing an upward first acting force on the control member (110).

3. The floor brush assembly of claim 2, wherein the release member (112) comprises: a main body portion (1120) and a snapping arm (1121) connected to the main body portion (1120) and extending transversely, wherein a free end of the snapping arm (1121) is provided with a hook portion (1122), wherein the roller brush holder (121) is provided with a first notch (1215) that is in communication with the handle recess (1213) and extends vertically, wherein the snapping arm (1121) passes through the first notch (1215) and extends into the handle recess (1213), and wherein when the release member (112) slides on the fixing holder (111), the snapping arm (1121) is propelled to slide along the first notch (1215), thereby enabling the hook portion (1122) to be snapped onto or separated from the roller brush handle (13).

4. The floor brush assembly of claim 3, wherein the fixing holder (111) is provided with a sliding cavity (1110) penetrating through an upper surface and a lower surface of the fixing holder (111), wherein a wall of the sliding cavity (1110) is provided with a second notch (1111) corresponding to the first notch (1215), wherein the main body portion (1120) of the release member (112) is arranged in the sliding cavity (1110), and wherein the snapping arm (1121) of the release member (112) passes through the second notch (1111).

5. The floor brush assembly of claim 3, wherein the roller brush handle (13) is rotatably connected to the roller brush holder (121) by means of a rotating shaft (1211), wherein the axis of the rotating shaft (1211) is perpendicular to the axis of the roller brush (120), and wherein the roller brush handle (13) is capable of rotating relative to the roller brush holder (121), so that the roller brush handle (13) is screwed in or screwed out from the handle recess (1213).

6. The floor brush assembly of claim 5, wherein the roller brush handle 13 comprises:
a handle portion (130) and a connecting portion (131) connected to one end of the handle portion (130), wherein the connecting portion (131) is rotatably connected to the rotating shaft (1211), and wherein when the roller brush handle (13) is in the second state, the extending direction of the handle portion (130) is consistent with the axial direction of the roller brush (120).

7. The floor brush assembly of claim 6, wherein the handle portion (130) of the roller brush handle (13) is provided with an inner cavity (132), wherein an outer wall surface of the handle portion (130) is provided with an inserting port (133) in communication with the inner cavity (132), and wherein when the roller brush handle (13) is in the first state, the free end of the snapping arm (1121) extends into the inner cavity (132) through the inserting port (133) and is snapped onto a wall of the inner cavity (132) by means of the hook portion (1122).

8. The floor brush assembly of claim 5, wherein the rotating shaft (1211) is arranged in the handle recess (1213), wherein a torsion spring (1212) is sleeved on the rotating shaft (1211),wherein the torsion spring (1212) is configured to impose a second acting force for screwing the roller brush handle (13) out from the handle recess (1213), and wherein when the release member (112) is separated from the roller brush handle (13), the roller brush handle (13) is automatically screwed out from the handle recess (1213) under the second acting force.

9. The floor brush assembly of claim 1, wherein the roller brush holder (121) comprises:
a vertically arranged plate body (1210), wherein a first end portion of the plate body (1210) is detachably connected to the roller brush (120), wherein a second end portion of the plate body (1210) opposite to the first end portion is recessed towards the floor brush main body (10) to form the handle recess (1213), wherein a convex portion (1214) is formed on a side facing the floor brush main body (10), and wherein a groove (105) is formed in a first side surface of the floor brush main body (10) for accommodating the convex portion (1214).

10. A floor cleaning apparatus, comprising:
a body assembly (2), and
a handle assembly (3), wherein the floor cleaning apparatus further comprises:
the floor brush assembly (1) in any one of claims 1-9, and wherein the body assembly (2) is respectively connected to floor brush assembly (1) and the handle assembly (3).
